# EUROPEAN PATENT APPLICATION

(11) **EP 4 831 956 A1**
(43) Date of publication of application: **28.10.2026**
(21) Application number: 24906887.5
(22) Date of filing: 11.10.2024
(51) Int. Cl.: G08G 1/09

(54) **INFORMATION PROVIDING DEVICE, INFORMATION PROVIDING METHOD, AND INFORMATION PROVIDING PROGRAM**

(30) Priority: 18.12.2023 JP 2023212707
(71) Applicant: TOYOTA JIDOSHA KABUSHIKI KAISHA, Toyota-Shi, Aichi-Ken 471-8571 (JP)
(72) Inventor: TAMAGAWA, Shuichi, Toyota-shi, Aichi 471-8571 (JP); SUEHIRO, Yuki, Toyota-shi, Aichi 471-8571 (JP)
(74) Representative: Cabinet Beau de Loménie
(86) International application number: PCT/JP2024/036537
(87) International publication number: WO 2025/134499

(57) **Abstract**

An information providing device includes a notification device. The notification device is configured to notify one or more candidate operators of presentation information before a remote operator who accepts a request for remote operation from a moving body is determined. The one or more candidate operators are candidates for the remote operator. The presentation information indicates a content of the request.

## Description

### [Technical Field]

The present disclosure relates to an information providing device, an information providing method, and an information providing program.

### [Background Art]

JP 2019-194809 A discloses a driving system for a vehicle including a remote driving management device. In response to a remote driving demand, the remote driving management device refers to the registration data of remote drivers to determine a driver who will remotely drive the vehicle, and requests the determined remote driver to remotely drive the vehicle.

### [Citation List]

### [Patent Literature]

[PTL 1]
JP 2019-194809 A

### [Summary of Invention]

### [Technical Problem]

According to the technique disclosed in JP 2019-194809 A, after a remote driver who will perform remote driving based on a remote driving demand from a vehicle is determined by a remote driving management device, a request for the remote driving is notified to the remote driver. As a result, the remote driver who receives the request may feel anxious about the possibility of accepting an unintended request.

The present disclosure has been made in view of the problem described above, and an object thereof is to provide a technique that enables a remote operator candidate (candidate operator) to confidently accept a request for remote operation.

### [Solution to Problem]

An information providing device according to the present disclosure includes a notification device. The notification device is configured to notify one or more candidate operators of presentation information before a remote operator who accepts a request for remote operation from a moving body is determined. The one or more candidate operators are candidates for the remote operator. The presentation information indicates a content of the request.

An information providing method according to the present disclosure is a method for a computer to provide information. The information providing method includes: obtaining presentation information indicating a content of a request for remote operation from a moving body; and notifying one or more candidate operators of the obtained presentation information via a notification device before a remote operator who accepts the request is determined, wherein the one or more candidate operators are candidates for the remote operator.

An information providing program according to the present disclosure is executed by a computer. The information providing program causes the computer to execute: obtaining presentation information indicating a content of a request for remote operation from a moving body; and notifying one or more candidate operators of the obtained presentation information via a notification device before a remote operator who accepts the request is determined, wherein the one or more candidate operators are candidates for the remote operator.

### [Advantageous Effects of Invention]

According to the present disclosure, before a remote operator is determined, the presentation information indicating the content of a request for remote operation is notified to a candidate operator. This allows the candidate operator to confidently determine whether or not to accept the request for the remote operation.

### [Brief Description of Drawings]

[Fig. 1]

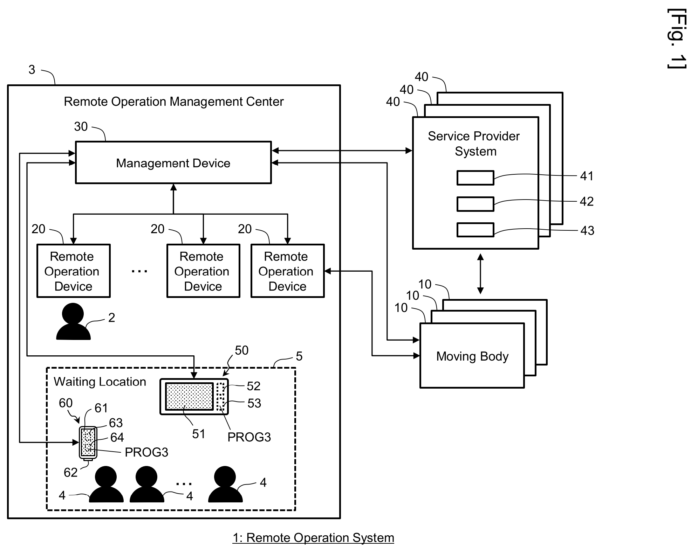

   Fig. 1 is a schematic diagram showing an example of a configuration of a remote operation system to which an "information providing device" according to an embodiment is applied.
[Fig. 2]

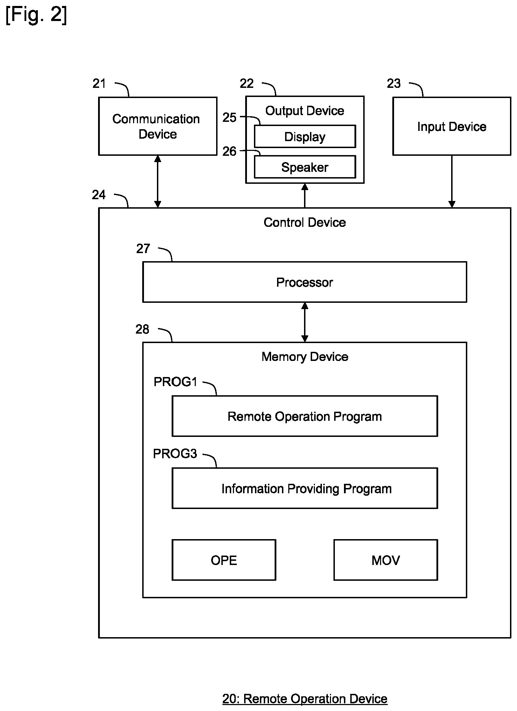

   Fig. 2 is a block diagram showing an example of a configuration of a remote operation device shown in Fig. 1.
[Fig. 3]

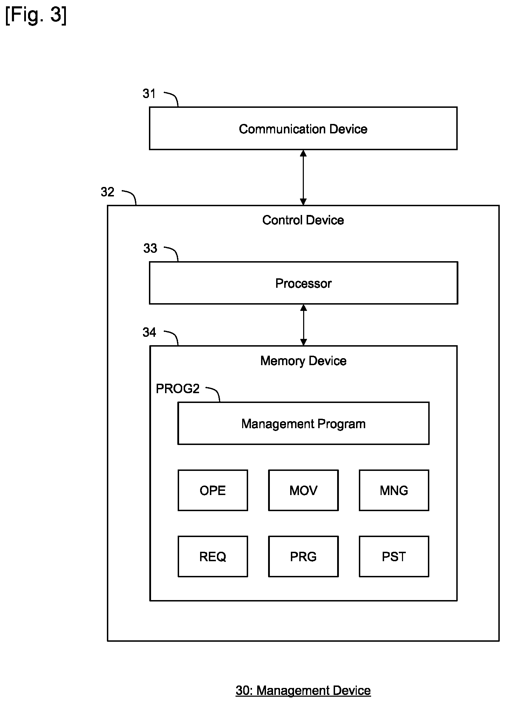

   Fig. 3 is a block diagram showing an example of a configuration of a management device shown in Fig. 1.
[Fig. 4]

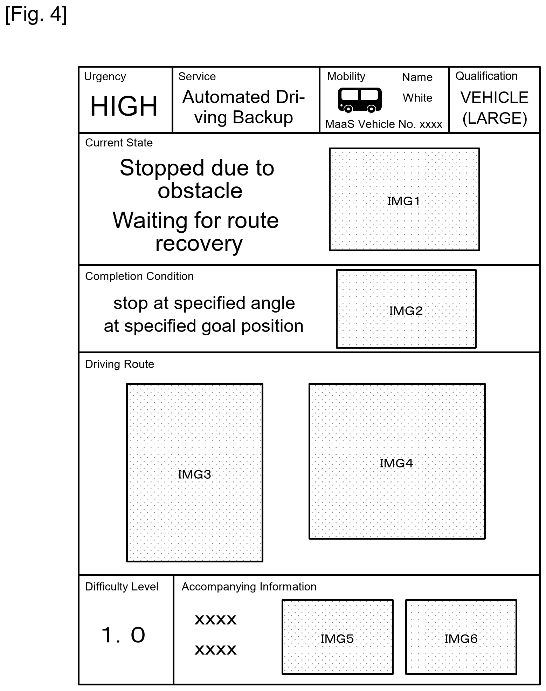

   Fig. 4 is a diagram showing a first display example of presentation information PST.
[Fig. 5]

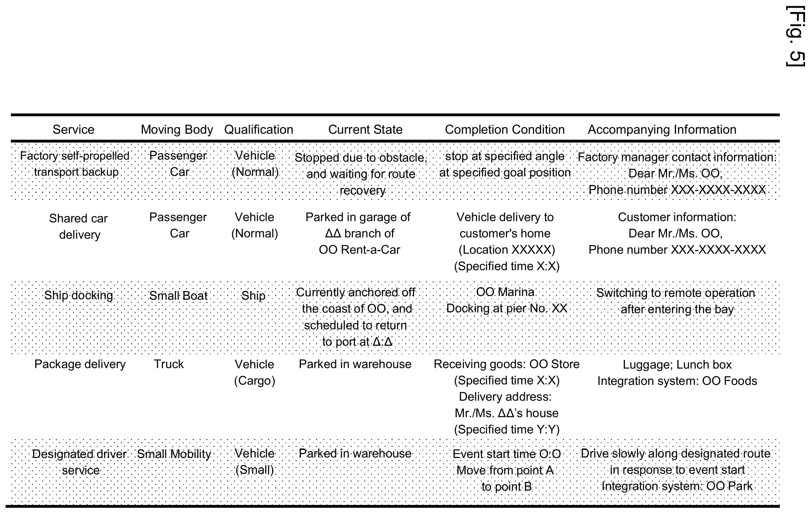

   Fig. 5 is a diagram showing a second display example of the presentation information PST.
[Fig. 6]

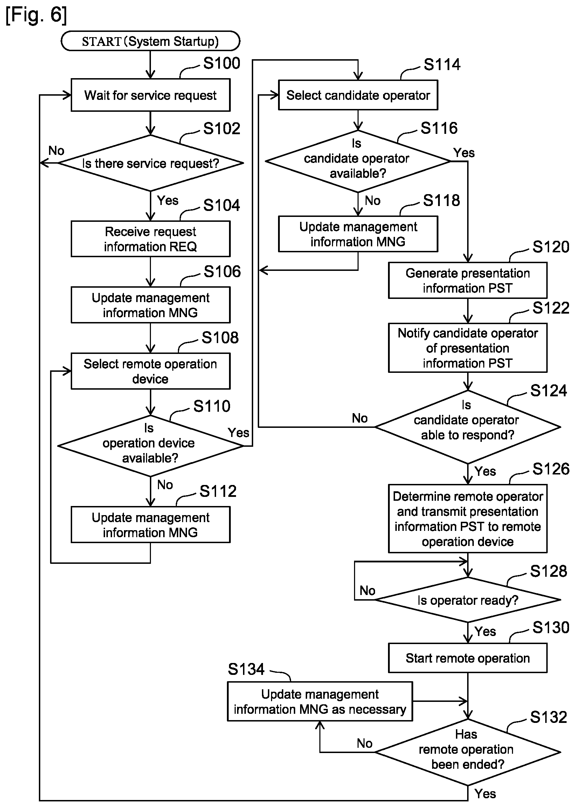

   Fig. 6 is a flowchart illustrating an example of processing executed by the management device to provide a remote operation service.

### [Description of Embodiments]

Embodiments of the present disclosure will be described with reference to the accompanying drawings.

### 1. Remote Operation System

Fig. 1 is a schematic diagram showing an example of the configuration of a remote operation system 1 to which an "information providing device" according to an embodiment is applied. The remote operation system 1 is a system for a remote operation of a moving body 10. The remote operation is a concept that includes remote driving. The remote operation system 1 includes the moving body 10, a remote operation device 20, a management device 30, a service provider system 40, a display device 50, and a mobile terminal 60.

The moving body 10 is the target for the remote operation. The remote operation device 20 is a device used by a remote operator 2 to remotely operate the moving body 10. That is, the moving body 10 is configured to be remotely operated by the remote operation device 20. The remote operation device 20 and the management device 30 are installed in a remote operation management center 3 for managing the remote operation of the moving body 10. More specifically, a plurality of remote operation devices 20 are arranged in the remote operation management center 3. The moving body 10, the remote operation device 20, and the management device 30 can communicate with each other via a communication network. Furthermore, each of the moving body 10 and the management device 30 can communicate with the service provider system (or simply the provider system) 40 via a communication network.

The management device 30 receives a request for the remote operation from the moving body 10 via the provider system 40. In response to this request, the management device 30 allocates (determines) a remote operator 2 from among a plurality of candidate operators 4 to the moving body 10 that is the target of the remote operation. The management device 30 manages the allocation relation between the moving body 10 and the remote operator 2. In addition, the management device 30 provides information on the allocation relation to the moving body 10 and the remote operation device 20. Based on the information on the allocation relation, the moving body 10 and the remote operation device 20 establish communication. After the communication is established, the moving body 10 and the remote operation device 20 may communicate directly without going through the management device 30.

The remote operation management center 3 is provided with a waiting location 5 as a facility associated with the remote operation device 20. The waiting location 5 is used by one or more candidate operators 4 who are waiting to receive a request for the remote operation.

Each of the candidate operators 4 is qualified to remotely operate one or more types of moving bodies 10. A candidate operator 4 determined as the remote operator 2 moves to the location of the designated remote operation device 20 and remotely operates the designated moving body 10 in accordance with the content of the designated remote operation service.

### 1-1. Types of Moving Bodies and Types of Remote Operation Services

In the example of the remote operation system 1 shown in Fig. 1, there is a plurality of types of moving bodies 10 that is the target of the remote operation. Specifically, for example, various types of moving bodies as listed below can be targets of the remote operation. Examples of the various types of moving bodies include passenger cars, trucks, small or large MaaS (Mobility as a Service) vehicles, buses, forklifts, carts, small boats, large cruisers, golf course carts, small personal mobilities, electric wheelchairs, amusement park rides (including attractions), drones, power shovels, and bulldozers.

Moreover, in the example of the remote operation system 1, the remote operation management center 3 provides a plurality of types of remote operation services. Specifically, various types of services as listed below may correspond to the remote operation services. Examples of the various types of services include automated driving backup, private car driving/parking, taxi/truck driving, shared car delivery, home delivery, luggage transportation, factory forklift loading/unloading, ship docking and undocking, movement of personal mobility, amusement park attraction driving, and drone landing. In addition, the automated driving backup refers to remotely operating an automated driving vehicle to evacuate when the automated driving vehicle encounters a situation where automated driving is difficult (for example, when the automated driving vehicle is stopped by an obstacle or becomes stuck).

### 1-2. Example of Remote Operation Device

Fig. 2 is a block diagram showing an example of the configuration of the remote operation device 20 shown in Fig. 1. For example, the remote operation device 20 may be configured as a remote cockpit that can be used with various types of moving bodies 10. Alternatively, for example, the remote operation device 20 may be configured as a remote cockpit having dedicated remote operation members for a specific type of moving body 10.

The remote operation device 20 includes a communication device 21, an output device 22, an input device 23, and a control device 24.

The communication device 21 communicates with the moving body 10 and the management device 30. The output device 22 outputs various kinds of information. For example, the output device 22 includes a display 25. The display 25 displays various kinds of information to present the various kinds of information to the remote operator 2. The output device 22 also includes a speaker 26. The speaker 26 outputs, for example, sounds detected by a microphone of the moving body 10 and outputs various kinds of information transmitted from the management device 30 by voice.

The input device 23 receives input from the remote operator 2. For example, the input device 23 includes a remote operation member that is operated by the remote operator 2 remotely operating the moving body 10. Examples of remote operation members include a steering wheel, an accelerator pedal, a brake pedal, a direction indicator, a joystick, a cross key, and a switch. The remote operation member may be a touch panel. The input device 23 may include a keyboard, a mouse, or a touch panel in addition to the remote operation member.

The control device 24 controls the remote operation device 20. The control device 24 includes one or more processors 27 (hereinafter, simply referred to as a processor 27) and one or more memory devices 28 (hereinafter, simply referred to as a memory device 28). The processor 27 executes various kinds of processing. The memory device 28 stores various kinds of information. Examples of the processor 27 include one or a combination of a general purpose processor, a special purpose processor, a central processing unit (CPU), a graphics processing unit (GPU), an application-specific integrated circuit (ASIC), a field-programmable gate array (FPGA), and an integrated circuit. The processor 27 can also be called circuitry or processing circuitry. The circuitry is hardware that is programmed to implement the described functions or hardware that performs the functions. The same applies to processors 33, 42, 52, and 63, which will be described below. Examples of the memory device 28 include one or a combination of a volatile memory, a non-volatile memory, a hard disk drive (HDD), and a solid state drive (SSD). The same applies to memory devices 34, 43, 53, and 64, which will be described below.

The remote operation program PROG1 is a computer program executed by the processor 27. The functions of the control device 24 may be realized by cooperation between the processor 27 that executes the remote operation program PROG1 and the memory device 28. The remote operation program PROG1 is stored in the memory device 28. Alternatively, the remote operation program PROG1 may be recorded on a non-transitory computer-readable recording medium.

The control device 24 communicates with the moving body 10 via the communication device 21. The control device 24 receives a moving body information MOV transmitted from the moving body 10. The moving body 10 is equipped with various sensors including a camera. The camera photographs the surroundings of the moving body 10 and obtains a video (image) showing the situation around the moving body 10. The moving body information MOV is information obtained by various sensors, and includes images obtained by the camera. The control device 24 displays the moving body information MOV including the video on the display 25, thereby presenting the moving body information MOV to the remote operator 2. The remote operator 2 can recognize the state and surrounding situation of the moving body 10 based on the moving body information MOV displayed on the display 25.

The remote operator 2 operates the remote operation member of the input device 23. The amount of operation of the remote operation member is detected by a sensor installed on the remote operation member. The control device 24 generates remote operation information OPE that reflects the amount of operation of the remote operation member by the remote operator 2. Then, the control device 24 transmits the remote operation information OPE to the moving body 10 via the communication device 21.

As a computer program executed by the processor 27, the memory device 28 also stores an information providing program PROG3 (see Section 1-5 below). Alternatively, the information providing program PROG3 may be recorded on a non-transitory computer-readable recording medium for use by the remote operation device 20.

When the processor 27 executes the information providing program PROG3, the remote operation device 20 equipped with the output device 22 (display 25 and speaker 26), which is an example of the "notification device" according to the present disclosure, functions as an "information providing device" according to the present disclosure. In this example, it can be said that the remote operation device 20 is integrated with the information providing device.

### 1-3. Example of Management Device

Fig. 3 is a block diagram showing an example of the configuration of the management device 30 shown in Fig. 1. The management device 30 manages the remote operation system 1. The management device, for example, the management device 30 is a cloud-based management server. The management server may be configured with a plurality of servers that perform distributed processing.

The management device 30 includes a communication device 31 and a control device 32. The communication device 31 communicates with the moving body 10, the remote operation device 20, and the provider system 40.

The control device 32 controls the management device 30. The control device 32 includes one or more processors 33 (hereinafter, simply referred to as a processor 33) and one or more memory devices 34 (hereinafter, simply referred to as a memory device 34). The processor 33 executes various kinds of processing. The memory device 34 stores various kinds of information. The various kinds of information includes management information MNG, the details of which will be described below as appropriate.

The management program PROG2 is a computer program executed by the processor 33. The functions of the control device 32 may be realized by cooperation between the processor 33 that executes the management program PROG2 and the memory device 34. The management program PROG2 is stored in the memory device 34. Alternatively, the management program PROG2 may be recorded on a non-transitory computer-readable recording medium.

The control device 32 communicates with the moving body 10, the remote operation device 20, and the provider system 40 via the communication device 31. The control device 32 receives the moving body information MOV transmitted from the moving body 10. Then, the control device 32 transmits the received moving body information MOV to the remote operation device 20. The control device 32 also receives the remote operation information OPE transmitted from the remote operation device 20. Then, the control device 32 transmits the received remote operation information OPE to the moving body 10.

Moreover, the control device 32 communicates with the service provider system 40 via the communication device 31. The control device 32 receives request information REQ, which will be described below, transmitted from the service provider system 40. The control device 32 determines the remote operation device 20 to be used for the remote operation according to the received request information REQ, and also determines the remote operator 2 to operate the determined remote operation device 20. The processing executed by the control device 32 to determine the remote operator 2 includes processing of selecting one or more candidate operators 4 who are candidates for the remote operator 2. In addition, the control device 32 generates presentation information PST, which will be described below, based on the received request information REQ. The details of the generated presentation information PST will be described below in Section 3.

Furthermore, the control device 32 generates progress information PRG indicating the progress of the remote operation after receiving the request for the remote operation. Then, the control device 32 transmits the generated progress information PRG to the service provider system 40 that transmitted the request information REQ. The details of the progress information PRG will be described below in Section 2-2.

### 1-4. Service Provider System

Fig. 1 illustrates a plurality of service provider systems 40. Each provider system 40 is a server of a provider that provides one or more types of remote operation services to one or more types of moving bodies 10. Each provider system 40 includes a communication device 41, one or more processors 42 (hereinafter, simply referred to as a processor 42), and one or more memory devices 43 (hereinafter, simply referred to as a memory device 43). The memory device 43 stores information MI on each moving body 10 that receives a remote operation service from a service provider. The information MI of each moving body 10 includes, for example, information on the ID (Identification) number, type (e.g., classification or model) and color of the moving body 10.

Each service provider system 40 receives a request for the remote operation from the moving body 10. The request from the moving body 10 includes, for example, information MI on the moving body 10, location information on the moving body 10, and information indicating the type of the remote operation service demanded by the moving body 10. In response to the received request, the provider system 40 generates request information REQ. The request information REQ is information indicating the specific content of a request when a remote operation based on the request from the moving body 10 is requested to the remote operation management center 3. The service provider system 40 transmits the generated request information REQ to the management device 30. Specific examples of the request information REQ will be described below in Section 2-1. In addition, the service provider system 40 receives the progress information PRG from the management device 30.

### 1-5. Display Device and Mobile Terminal

One or more display devices 50 are installed in the waiting location 5. Further, at least one of the one or more candidate operators 4 waiting at the waiting location 5 carries the mobile terminal 60. Each of the display device 50 and the mobile terminal 60 are capable of communicating with the management device 30 via a communication network. Each of the display device 50 and the mobile terminal 60 is configured to receive presentation information PST, which will be described below, from the management device 30 and notify one or more candidate operators 4 of the received presentation information PST. As described above, each of the display device 50 and the mobile terminal 60 corresponds to an example of the "information providing device" according to the present disclosure.

Specifically, the display device 50 includes a display 51, one or more processors 52 (hereinafter, simply referred to as a processor 52), and one or more memory devices 53 (hereinafter, simply referred to as a memory device 53). The processor 52 executes various kinds of processing, such as processing related to the control of the display 51. The memory device 53 stores various kinds of information.

The information providing program PROG3 is a computer program executed by the processor 52. The functions of the display device 50 may be realized by cooperation between the processor 52 that executes the information providing program PROG3 and the memory device 53. The information providing program PROG3 is stored in the memory device 53. Alternatively, the information providing program PROG3 may be recorded on a non-transitory computer-readable recording medium.

The mobile terminal 60 is, for example, a smartphone or a tablet terminal. The mobile terminal 60 includes a display 61, a speaker 62, one or more processors 63 (hereinafter, simply referred to as a processor 63), and one or more memory devices 64 (hereinafter, simply referred to as a memory device 64). The display 61 is, for example, a touch panel. The processor 63 executes various kinds of processing, such as processing related to the control of the display 61 and the speaker 62. The memory device 64 stores various kinds of information.

Similar to the display device 50, the functions of the mobile terminal 60 may be realized by cooperation between the processor 63 that executes the information providing program PROG3 and the memory device 64. The information providing program PROG3 is stored in the memory device 64. Alternatively, the information providing program PROG3 may be recorded on a non-transitory computer-readable recording medium.

Additionally, the "notification device" according to the present disclosure is a device that notifies information by at least one of display and sound, and is, for example, at least one of a display and a speaker. The displays 51 and 61 and the speaker 62 correspond to examples of the "notification device". That is, in the example of the display device 50, the notification of the presentation information PST is performed by displaying the presentation information PST on the display 51. Also, in the example of the mobile terminal 60, the notification of the presentation information PST is performed by displaying the presentation information PST on the display 61. Alternatively, the presentation information PST may be notified by audio notification of the presentation information PST using the speaker 62 in addition to or instead of the display.

### 2. Communication Between Management Device (Remote Operation Management Center) and Service Provider System

As described above, each service provider system 40 transmits the request information REQ to the management device 30, and the management device 30 transmits the progress information PRG to the provider system 40 that transmitted the request information REQ. The formats of the request information REQ and progress information PRG transmitted in this manner are standardized between the management device 30 and each provider system 40.

### 2-1. Request Information REQ from Service Provider System

The following are various specific examples of the request information REQ that indicates the content of the request for the remote operation.

### (Urgency)

The request information REQ may include information on the "urgency of the remote operation" at the time of the request. The urgency indicates the degree to which quick start of the remote operation is required. The urgency is specified by a number of levels (for example, three or five levels) designated in advance by the remote operation management center 3. Examples of situations in which the remote operation has to be started quickly include a situation in which the moving body 10 has to be moved quickly, or a situation in which the moving body 10 has to be delivered to a target location quickly. The following are examples of setting the urgency. That is, in an example in which an automated driving backup is requested as the remote operation service, it is necessary to quickly move the moving body 10 because, for example, the automated driving vehicle has stopped on the road. For this reason, the urgency is set to "high". Further, in an example in which a request is made to deliver a shared car as the remote operation service, the shared car has to be delivered to the customer by a specified time. For this reason, the urgency is set to "medium". Furthermore, in an example in which a request is made to return a rental car as the remote operation service, there is no need to rush because what is required is to return the rental car to its business office (waiting location) after use. For this reason, the urgency is set to "low".

### (State of Moving Body)

The request information REQ may also include information indicating the "state of the moving body 10" at the time of the request. This information is necessary for the remote operator 2 to start the requested remote operation. For example, the information indicating the state of the moving body 10 may be text information, such as "parked in a garage" or "automated driving vehicle stopped in the middle of the road". Alternatively, the information indicating the state of the moving body 10 may include, in addition to the text information, one or both of image information on the moving body 10 at the time of the request and information on the surroundings of the moving body 10. More specifically, the image information is, for example, an image (including video) captured by the camera mounted on the moving body 10.

### (Type of Moving Body and Type of Remote Operation Service)

The request information REQ may also include information indicating the type of the moving body 10 that is the target of the requested remote operation. Examples of the type of the moving body 10 have already been described. The request information REQ may also include information indicating the type of the requested remote operation service. Examples of the type of the remote operation service have already been described.

### (Completion Condition)

The request information REQ may also include information indicating a completion condition for the requested remote operation. In other words, the completion condition is a condition for ending the remote operation. For example, the completion condition may be "to move the moving body 10 to the goal point" or "to pick up a person or an object during the movement by the remote operation".

### (Location Information)

The request information REQ may also include location information, that is, information indicating the positions of various locations, such as the start point, goal point, and passing points in the movement of the moving body 10 under the remote operation service.

### (Accompanying Information)

The request information REQ may also include accompanying information. In a remote operation service that requires picking up a person or an object, the accompanying information is, for example, information on the person or object to be picked up (for example, name and image).

### 2-2. Progress Information PRG to Service Provider System

The progress information PRG is information indicating the progress of the remote operation after the request is started. The progress information PRG may include current state information indicating the current state of the moving body 10 after the request is started. For example, the current state information may include "remote operation has not yet started", "remote operator 2 is being selected", and "remote operation is in progress". These kinds of current state information can be obtained based on, for example, record information of the processing executed by the processor 33. Furthermore, the current state information may include information on the remote operator 2 who is performing the remote operation (for example, ID number, proficiency, and evaluation score) in addition to the information "remote operation is in progress". The information on the remote operator 2 is obtained in advance and is included in the management information MNG.

The progress information PRG may also include current position information of the moving body 10 after the request is started. The current position information can be obtained from the moving body information MOV.

Furthermore, the progress information PRG may include the following accompanying information. For example, in a remote operation service for transporting a person or an object, the accompanying information may include information indicating whether or not a person or an object has been picked up, information on the person or object that has been picked up (such as an image showing the person or the object), and information indicating whether or not the transport has been completed. These kinds of accompanying information can be obtained from the moving body information MOV.

By receiving the progress information PRG from the management device 30 (remote operation management center 3), the service provider can properly grasp the progress of the remote operation.

### 3. Providing Information to Candidate Operators (Presentation Information PST)

As described above, the management device 30 (control device 32) generates presentation information PST based on the request information REQ. Then, in order to present the generated presentation information PST to one or more candidate operators 4 for the remote operation according to the request information REQ, the management device 30 transmits the presentation information PST to the information providing device (for example, display device 50). The information providing device that has obtained the presentation information PST notifies the one or more candidate operators 4 of the presentation information PST by displaying the presentation information PST on the notification device (for example, display 51) (see, for example, Fig. 4 or 5 described below).

In the present embodiment, the notification of the presentation information PST described above is executed to one or more candidate operators 4 before the remote operator 2 who will accept the request for the remote operation according to the request information REQ is determined.

### 3-1. Examples of Information Providing Devices That Are Transmission Targets

In the example of the remote operation system 1 shown in Fig. 1, the "information providing device" to which the presentation information PST is transmitted is at least one of the display device 50 in the waiting location 5, the mobile terminal 60, and the remote operation device 20.

To be specific, in an example in which one or more candidate operators 4 are waiting at the waiting location 5 as shown in Fig. 1, the management device 30 may transmit presentation information PST to each of the display device 50 and the mobile terminal 60. Alternatively, the management device 30 may transmit to only one of the display device 50 and the mobile terminal 60. In addition, the management device 30 may transmit the presentation information PST not only to one or both of the display device 50 and the mobile terminal 60, but also to the remote operation device 20 that is scheduled to be operated by the remote operator 2 to perform the remote operation according to the request information REQ. That is, the target of notification of the presentation information PST by the "information providing device" may include a remote operator 2 who starts remote operation after a candidate operator 4 is determined as the remote operator 2.

On the other hand, in an example of a remote operation system having a remote operation device 20 dedicated to a candidate operator 4, the transmission of the presentation information PST before the remote operator 2 is determined may be performed as follows. That is, when the candidate operator 4 is waiting at a location where the dedicated remote operation device 20 is located (e.g., a remote cockpit), the management device 30 may transmit the presentation information PST to the remote operation device 20 functioning as the "information providing device". In addition, the "location where the remote operation device 20 is located" may include not only the remote operation management center 3 but also a location outside the remote operation management center 3, for example.

### 3-2. Specific Examples of Presentation Information PST

The presentation information PST may be the same as the request information REQ. Alternatively, to make it easier for the remote operator 2 to understand and perform the remote operation, the presentation information PST may include information that has been processed or added based on the management information MNG of the management device 30, along with the request information REQ, as follows. The management information MNG used here includes various kinds of information obtained in advance based on information, such as the moving body information MOV. The various kinds of information referred to here include, for example, surrounding information on the area where the remote operation is performed, past remote operation performance information, and characteristic information on the moving body 10. The surrounding information referred to here includes, for example, information indicating points that the remote operator 2 should pay attention to when performing the remote operation (for example, locations of road depressions and locations where road construction is underway). The past remote operation performance information includes, for example, information collected by the management device 30 from the moving body information MOV while the moving body 10 was moving by past remote operation (for example, while the vehicle was traveling). The characteristic information on the moving body 10 is, for example, information indicating the operating characteristics of each type of moving body 10.

Examples of the presentation information PST that shares a part with the request information REQ will be described here. That is, for example, the presentation information PST is the same as the request information REQ in terms of the urgency, the type of the moving body 10, the type of the remote operation service, the state of the moving body 10, the completion condition, and the accompanying information.

Moreover, the presentation information PST may include, for example, information on required qualifications as additional information PST1 that is not included in the request information REQ. The moving bodies 10 that are the targets of the remote operation includes moving bodies (for example, automobiles and ships) that require special operating qualifications. The information on required qualifications is information on a qualification, such as an operating qualification, required of the remote operator 2 for the remote operation (see, for example, Fig. 5).

Moreover, the presentation information PST may include information on difficulty level D of the remote operation as another example of the additional information PST1. The difficulty level D is obtained from, for example, the management information MNG (see step S106 described below).

Furthermore, the presentation information PST may include, for example, information on a travel route as processed information PST2 obtained by processing the request information REQ. The information on the travel route includes, for example, information on the travel route itself (for example, the driving route of a vehicle), information on passing points along the travel route, and information on points requiring attention.

The information on the travel route is generated based on, for example, the above-described various kinds of information (such as the surrounding information on the area where the remote operation is performed, the past remote operation performance information, and the characteristic information on the moving body 10) in addition to the location information included in the request information REQ. Specifically, as the information on the travel route, the management device 30 calculates the optimal travel route for the remotely operated moving body 10 based on the location information and the various kinds of information. Specific examples of the information on the travel route will be described below with reference to Fig. 4.

Fig. 4 is a diagram showing a first display example of the presentation information PST. The presentation information PST shown in Fig. 4 is displayed on the "notification device", such as the display 51. In the first display example, each piece of information constituting the presentation information PST corresponding to one request of the remote operation is displayed in an easy-to-understand manner by dividing the each piece of information into individual display areas.

To be specific, text information indicating a high level of urgency is displayed in large letters. Text information indicating the type of the remote operation service (automated driving backup) is also displayed. Further, a combination of text information (MaaS vehicle), which is an example of information indicating the type of the moving body (mobility) 10, and an icon is displayed along with the name, color, and identification number of the MaaS vehicle as the accompanying information.

Moreover, in the first display example, a combination of text information (stopped due to obstacle, waiting for route recovery), which is an example of information indicating the state (current state) of the MaaS vehicle at the time of the request, and image information IMG1 is displayed. The image information IMG1 is an on-board camera image. In the image information IMG1, an obstacle to be avoided that is included in the on-board camera image is marked using augmented reality (AR) technique.

Moreover, in the first display example, a combination of text information (stop at a specified angle at a specified goal position), which is an example of information indicating the completion condition, and image information IMG2 is displayed. In this image information IMG2, goal information (for example, a goal frame indicating the goal position) is superimposed on the same on-board camera image as that in the image information IMG1 using AR technique. In this example, detailed goal information, which includes not only specifying the goal location but also specifying the angle of the MaaS vehicle when the MaaS vehicle stops at the goal location, is displayed as the completion condition. Further, the goal information is displayed visually in an easy-to-understand manner using AR superimposed display.

Moreover, in the first display example, two pieces of image information IMG3 and IMG4 are displayed as examples of information indicating a driving route (travel route) that avoids the obstacle. The image information IMG3 is a top view showing the driving route, that is, two-dimensional map information. The image information IMG4 is three-dimensional map information in which the driving route is displayed in a superimposed manner on the same on-board camera image as that in the image information IMG1 using AR technique. These pieces of image information IMG3 and IMG4 visually display the obstacle avoidance route in an easy-to-understand manner. In addition, the information on the driving route may be notified along with audio information output from a device, such as the speaker 62.

Moreover, in the first display example, numerical information (for example, 1.0) is displayed as an example of information indicating the difficulty level D of the remote operation. Alternatively, the difficulty level D may be displayed by text information, such as "easy", "normal", or "difficult".

Furthermore, in the first display example, the accompanying information is displayed using a combination of text information and image information IMG5 and IMG6. The text information is, for example, the name of the person or object to be picked up. The image information IMG5 and IMG6 is, for example, for example, an image regarding the person or object to be picked up. In addition, for example, image information indicating points to pay attention to when avoiding the obstacle is basically information on the driving route, but may also be included in the accompanying information.

Fig. 5 is a diagram showing a second display example of the presentation information PST. The presentation information PST shown in Fig. 5 is displayed on the "notification device", such as the display 51. In the second display example, five pieces of presentation information PST corresponding to five requests for the remote operation for which remote operators 2 have not yet been determined are organized as a list and displayed in an easy-to-understand manner. Each piece of presentation information PST includes information indicating the service (type of remote operation service), mobility (type of moving body), required qualification, current state, and completion condition, as well as the accompanying information. The contents of each piece of information are as shown in FIG. 5. In addition, when presentation information PST based on a newly received request is displayed, this presentation information PST may be displayed in a manner that can easily be distinguished from the presentation information PST corresponding to other requests. For example, a frame surrounding the presentation information PST to be newly displayed may be displayed in a superimposed manner, or the background color of the display area of the presentation information PST may be a color different from the background colors of the other display areas. In addition, in this list, may be displayed from top to bottom in descending order of the urgency of the remote operation.

### 3-3. Examples of Customizing Presentation Information PST

Furthermore, the presentation information PST may be changed (customized) by each candidate operator 4 as follows.

For example, the presentation information PST may be generated differently depending on the proficiency of the candidate operator 4 in the remote operation. Specifically, for example, for a candidate operator 4 with low experience, the management device 30 may generate presentation information PST such that a lot of accompanying information (for example, points to pay attention to, and advice) is included. On the other hand, for an advanced candidate operator 4, the management device 30 may generate the presentation information PST such that accompanying information that is obvious to an advanced operator is not included. In addition, the information on the proficiency of the candidate operator 4 in the remote operation can be obtained based on the above-described past remote operation performance information included in the management information MNG, for example.

Furthermore, for example, when requesting a candidate operator 4 who is specialized in a specific remote operation service to perform remote operation according to the specific remote operation service, the management device 30 may generate presentation information PST such that a content specialized for the specific remote operation service is included.

### 4. Processing by Management Device

Fig. 6 is a flowchart illustrating an example of processing executed by the management device 30 to provide a remote operation service. The processing of this flowchart is executed while the remote operation system 1 is in operation.

### Steps S100 and S102:

In step S100, the management device 30 (processor 33) waits for a request for a remote operation service from the service provider system 40. While there is no request for a remote operation service (step S102; No), the management device 30 maintains a standby state. On the other hand, when a request for a remote operation service is received while the management device 30 is on standby (step S102; Yes), the management device 30 continues to wait for requests for other remote operation services and executes the processing from step S104 onwards in parallel.

### Step S104:

In step S104, the management device 30 receives the request information REQ from the service provider system 40. As already described, the request information REQ includes information, such as the type of remote operation service and the urgency.

### Step S106:

Then, in step S106, the management device 30 reads and updates the management information MNG stored in the memory device 34. Specifically, for example, the management information MNG includes: various kinds of information included in the request information REQ (such as the type of remote operation service and the urgency); the above-described difficulty level D; the priority of responding to the request; information on the candidate operator 4 (for example, past operation performance, qualifications held, and waiting information); and information on the remote operation device 20 (for example, information indicating a suitable moving body 10, and waiting information). The response priority is determined based on, for example, the type of remote operation service, the urgency, and the difficulty level D.

In step S106, the management device 30 calculates (sets) the difficulty level D of the remote operation according to the current request information REQ received in step S104 using the following manner. Then, the management device 30 takes into consideration the calculated difficulty level D and updates the response priority of each remote operation request currently included in the management information MNG.

### (Calculation Manner of Difficulty Level D)

For example, the above-described difficulty level D can be calculated as follows based on various kinds of information included in the request information REQ transmitted from the service provider system 40. That is, in this example, the difficulty level D is calculated by multiplying a predetermined base value (e.g., 1.0) by coefficients Ki (i = 1 to n) respectively corresponding to the various kinds of information (e.g., urgency, type of remote operation service, type of moving body 10, completion condition, travel route, and whether or not a specified time is present). That is, each coefficient Ki indicates the difficulty level Di for each individual piece of information, such as the urgency. For example, when the difficulty level Di is standard, each coefficient Ki is set to a reference value (for example, 1.0). Further, each coefficient Ki is set to a value (e.g., 0.8) smaller than the reference value when the difficulty level Di is lower than the standard difficulty level, and set to a value (e.g., 1.5) greater than the reference value when the difficulty level Di is higher than the standard difficulty level. This relation between each coefficient Ki and the difficulty level Di of each piece of information, such as the urgency, is determined in advance and stored in the memory device 34. From the above relation, the management device 30 obtains each coefficient Ki according to the various kinds of information included in the current request information REQ. For example, when the urgency included in the current request information REQ is "high", the management device 30 obtains the urgency coefficient K1 corresponding to the "high" level of urgency from the above relation.

Moreover, each coefficient Ki of the difficulty level D calculated as described above may be corrected (optimized) based on, for example, the result of an evaluation of the difficulty level by the remote operator 2 who actually performed the remote operation. Specifically, each time a remote operation is completed, the management device 30 obtains an evaluation result (e.g., easy, normal, or difficult) of the difficulty level of the current remote operation from the remote operator 2 via the remote operation device 20. The management device 30 stores the obtained evaluation result in the memory device 34 in association with the difficulty level (i.e., set difficulty level) D set in step S106 for remote operation. As a result, the relation between the evaluation result and the set difficulty level D is accumulated. Further, the management device 30 determines the deviation of the evaluation result relative to the set difficulty level D based on the accumulated information, and if the deviation is found, executes processing to statistically optimize each coefficient Ki such that the deviation is reduced.

Furthermore, each coefficient Ki of the difficulty level D may be similarly corrected (optimized) based on, for example, at least one of the "time required for remote operation" and the "number of times a problem related to remote operation has occurred", instead of or in addition to the evaluation result of the remote operator 2. Specifically, in an example in which the time required for remote operation is used, each time a remote operation is completed, the management device 30 stores the actual time required for the remote operation in the memory device 34 in association with the estimated value of the time required for the remote operation. This allows the relation between the time actually required and the estimated value to be accumulated. Further, the management device 30 determines, based on the accumulated information, whether or not the time actually required is too long compared to the estimated value, and if the time actually required is too long, executes processing to statistically optimize each coefficient Ki such that the time difference is shortened. Similarly, in an example in which the number of times a problem related to remote operation has occurred is used, each time a remote operation is completed, the management device 30 stores, in the memory device 34, the number of times a problem has occurred. This allows the number of times a problem has occurred to be accumulated. Further, the management device 30 determines, based on the accumulated information, whether or not the number of times a problem has occurred is too high, and if the number of times a problem has occurred is too high, executes processing to statistically optimize each coefficient Ki such that the number of times a problem has occurred is reduced.

### Step S108:

Then, in step S108, the management device 30 selects a remote operation device 20 to be used for the remote operation according to the current request information REQ. Specifically, the management device 30 selects the remote operation device 20 based on, for example, information included in the management information MNG (for example, the type of remote operation service and the response priority).

### Steps S110 and S112:

Then, in step S110, the management device 30 executes processing of confirming whether or not the selected remote operation device 20 is available. As a result, when the remote operation device 20 is not available (step S110; No), the processing proceeds to step S112. In step S112, the management device 30 updates the management information MNG such that the selected remote operation device 20 is in a waiting state. Thereafter, the processing of steps S108 and S110 is repeatedly executed.

### Step S114:

On the other hand, when the selected remote operation device 20 is available (step S110; Yes), the processing proceeds to step S114. In step S114, the management device 30 selects a candidate operator 4 for the remote operation according to the current request information REQ. Specifically, the management device 30 selects the candidate operator 4 based on, for example, information included in the management information MNG (for example, the type of remote operation service and the response priority).

### Steps S116 and S118:

Then, in step S116, the management device 30 executes processing of confirming whether or not the selected candidate operator 4 is available. As a result, if the candidate operator 4 is not available (step S116; No), the processing proceeds to step S118. In step S118, the management device 30 updates the management information MNG such that the selected candidate operator 4 is in a waiting state. Thereafter, the processing of steps S114 and S116 is repeatedly executed.

### Step S120:

On the other hand, if the selected candidate operator 4 is available (step S116; Yes), the processing proceeds to step S120. In step S120, the management device 30 generates presentation information PST using the manner already described.

### Step S122:

Then, in step S122, the management device 30 notifies the selected candidate operator 4 of the generated presentation information PST. In an example in which the candidate operator 4 is waiting at the waiting location 5, the presentation information PST is notified via the display device 50. In this example, the presentation information PST may include information for identifying the candidate operator 4 to be notified. In addition, if the candidate operator 4 carries the mobile terminal 60, the presentation information PST may be notified via the display device 50.

### (Example of Processing on Information Providing Device Side)

More specifically, in step S122, the management device 30 transmits the presentation information PST to the "information providing device", such as the display device 50, in order to notify the candidate operator 4 of the presentation information PST. The information providing device obtains (receives) the presentation information PST. Then, the information providing device notifies the candidate operator 4 of the obtained presentation information PST by, for example, displaying the obtained presentation information PST on a display. As described above, according to the flowchart shown in Fig. 6, the information providing device obtains the presentation information PST before the remote operator 2 who will perform the current remote operation is determined in step S126 described below, and notifies the candidate operator 4 of the presentation information PST before the determination.

### (Examples of Notification That Vary Depending on Urgency)

Additionally, in step S122, the management device 30 may transmit the presentation information PST together with an instruction to display the presentation information PST in a different manner depending on the urgency included in the presentation information PST. Alternatively, the management device 30 may transmit the presentation information PST together with an instruction to notify the presentation information PST with a different sound depending on the urgency. Alternatively, the management device 30 may transmit the presentation information PST together with both of these instructions.

The information providing device that has received the above-described instruction notifies the presentation information PST with at least one of a display and a sound that vary depending on the urgency. For example, when the presentation information PST is displayed as shown in Fig. 5, the information providing device may display the presentation information PST in a manner that makes a request for remote operation with the urgency equal to or higher than a predetermined level easier to distinguish than other requests. Also, for example, when notifying a request for remote operation with the urgency equal to or higher than a predetermined level, the information providing device may notify the presentation information PST together with a sound to attract the attention of the candidate operator 4, compared to when notifying other requests. The same applies to the transmission of presentation information PST in the processing of step S126 described below.

### Step S124:

Then, in step S124, the management device 30 executes processing of confirming with the candidate operator 4 whether or not the candidate operator 4 is able to respond to the current request for the remote operation. For example, the candidate operator 4 operates a predetermined device, such as the mobile terminal 60, to respond to the management device 30 as to whether or not to accept the request.

According to the processing of steps S122 and S124, the candidate operator 4 has an opportunity to check the notified presentation information PST and determine whether or not to accept the request for the remote operation before the remote operator 2 is determined. Additionally, the candidate operator 4 may also refuse to accept the request.

When the candidate operator 4 is not available (step S124; No), the processing returns to step S114. That is, another candidate operator 4 is selected. On the other hand, when the candidate operator 4 is available (step S124; Yes), the processing proceeds to step S126.

### Step S126:

In step S126, the management device 30 executes processing of determining the currently selected candidate operator 4 as the remote operator 2 who will perform the remote operation according to the current request. Then, the management device 30 transmits the presentation information PST to the remote operation device 20 that is scheduled to be used by the determined remote operator 2. The presentation information PST transmitted to the remote operation device 20 is displayed on, for example, the display 25. Alternatively, the presentation information PST may be notified by sound from the speaker 26 instead of or in addition to being displayed on the display 25.

### Step S128:

Then, in step S128, the management device 30 executes processing of determining whether or not the determined remote operator 2 is ready to start the current remote operation. For example, when the determined remote operator 2 operates a switch included in the remote operation device 20 used this time and gives a response indicating that preparation is complete, the management device 30 determines that preparation is complete.

### Step S130:

When the remote operator 2 is ready (step S128; Yes), the management device 30 allows the remote operator 2 to start the remote operation (step S130). Specifically, the management device 30 starts generating remote operation information OPE for the remote operation device 20 by the remote operator 2 and transmitting the generated remote operation information OPE to the moving body 10.

### Steps S132 and S134:

Then, in step S132, the management device 30 determines whether or not the current remote operation has ended. In other words, the management device 30 determines whether or not the above-described completion condition is met. As a result, when the remote operation has not ended (step S132; No), the processing proceeds to step S134. In step S134, the management device 30 updates the management information MNG as necessary. For example, the management device 30 updates information indicating the state (current state) of the moving body 10 during the remote operation.

On the other hand, if the remote operation has ended (step S132; Yes), the processing returns to step S100.

### 5. Advantageous Effects

As described above, according to the "information providing device" of the present embodiment, before the remote operator 2 who will accept the request for the remote operation from the moving body 10 is determined, the presentation information PST indicating the content of the request is notified to one or more candidate operators 4. This allows the candidate operator 4 to confidently accept the request for the remote operation.

More specifically, the presentation information PST is notified before the remote operator 2 is determined, whereby the candidate operator 4 can be given an opportunity to determine whether or not to accept the request based on the presentation information PST. Also, for example, if the information notified before the remote operator 2 is determined is simply a request notification requesting that the candidate operator 4 accept the request, the candidate operator 4 will have little information to determine whether or not to accept the request. As a result, for example, the candidate operator 4 may be required to determine whether or not to accept the request while feeling anxious about the possibility of accepting a request that was not originally intended, in order to gain an opportunity for the remote operation. In contrast to this, the presentation information PST according to the present embodiment is information that specifically indicates the content of the request for the remote operation. This allows the candidate operator 4 to determine with confidence whether or not to accept the request.

Moreover, the remote operation in the example of the remote operation system 1 shown in Fig. 1 targets a plurality of types of moving bodies 10. Therefore, if proper consideration is not given to requests for the remote operation to the candidate operator 4, the candidate operator 4 may feel very anxious about the possibility of accepting a request to remotely operate an unintended type of moving body 10. Furthermore, the more types of moving bodies 10 there are, the greater the potential anxiety of the candidate operator 4 may become. In this regard, the presentation information PST according to the present embodiment includes "information indicating the type of the moving body 10". Therefore, even when performing a remote operation task targeting a plurality of types of moving bodies 10, the candidate operator 4 can more confidently determine whether or not to accept the request.

In the example of the remote operation system 1 shown in Fig. 1, a plurality of types of remote operation services are provided. Therefore, if proper consideration is not given to requests for the remote operation to the candidate operator 4, the candidate operator 4 may feel very anxious about the possibility of accepting a request for an unintended type of remote operation service. Furthermore, the more types of remote operation services there are, the greater the potential anxiety of the candidate operator 4 may become. In this regard, the presentation information PST according to the present embodiment includes "information indicating the type of remote operation service". Therefore, even when performing a remote operation task targeting a plurality of types of moving bodies 10, the candidate operator 4 can more confidently determine whether or not to accept the request.

Additionally, according to the example in which the presentation information PST includes both information indicating the type of moving body 10 and information indicating the type of remote operation service, the "information providing device"' can present to the candidate operator 4 in a very easy-to-understand manner what kind of remote operation is required for what kind of remote operation service, depending on the type of the requested moving body 10 and the type of the requested remote operation service.

Moreover, the presentation information PST according to the present embodiment includes the "information indicating the state of the moving body 10 at the time of the request", the "information on the urgency of the remote operation", the "information on the qualification required of the remote operator 2", the "information on the condition for completing the remote operation", and the "information on the difficulty level of the remote operation". By including at least one of these various pieces of information in the presentation information PST, it is possible to present to the candidate operator 4 in an easy-to-understand manner what kind of remote operation is required to be performed.

Moreover, in the present embodiment, the presentation information PST is notified with at least one of a different display and sound depending on the urgency. Therefore, the candidate operator 4 can make decisions to give priority to accepting a request with a high level of urgency when, for example, the candidate operator 4 receives a plurality of pieces of presentation information PST at the same time. In addition, this allows the candidate operator 4 to raise his or her awareness of accepting a request with a high level of urgency.

Moreover, in the present embodiment, the presentation information PST is also notified to the remote operation device 20 that is scheduled to be operated by the remote operator 2 to perform remote operation based on the request. The presentation information PST is useful for the candidate operator 4 not only to determine whether or not to accept the request, but also to perform the remote operation after accepting the request. Therefore, for example, the candidate operator 4 who has been determined as the remote operator 2 can move from the waiting location 5, take a seat in the remote cockpit (remote operation device 20), and then quickly start remote operation while confirming the presentation information PST.

Moreover, the content of the presentation information PST required by the candidate operator 4 may differ depending on the proficiency of the candidate operator 4. Accordingly, in the present embodiment, the presentation information PST includes different content depending on the proficiency of the candidate operator 4 in remote operation. This makes it possible to more accurately notify the presentation information PST suited to each of the candidate operators 4.

Moreover, in the present embodiment, the "information providing device" is, for example, the display device 50 arranged in the waiting location 5. This allows the presentation information PST to be notified to one or more candidate operators 4 waiting at the waiting location 5 before being determined as the remote operator 2. Furthermore, the "information providing device" is, for example, the mobile terminal 60 carried by the waiting candidate operator 4. This allows the presentation information PST to be notified to the waiting candidate operator 4 before being determined as the remote operator 2.

### 6. Other Examples of Remote Operation System Configurations

The type of moving body 10 that is the target for the remote operation in the remote operation system 1 may be one.

Moreover, the type of remote operation service provided for one or more types of moving bodies 10 may be one.

Moreover, the remote operation system does not necessarily have to include the service provider system 40. In an example of a remote operation system that does not include the service provider system 40, the request information REQ may be transmitted directly from the moving body 10 to the management device 30.

Furthermore, in the example of the flowchart shown in Fig. 6, the management device 30 selects one candidate operator 4 and notifies the selected candidate operator 4 of the presentation information PST (see steps S114 and S122). Then, if the candidate operator 4 does not accept the request for the remote operation, the next candidate operator 4 is selected (see steps S124 and S114). Alternatively, the management device 30 may simultaneously notify one piece of presentation information PST to a plurality of candidate operators 4. Then, if the plurality of candidate operators 4 wish to accept the request, the management device 30 may execute processing of determining one candidate operator 4 from among the plurality of candidate operators 4 as the remote operator 2 based on, for example, the management information MNG.

### [Reference Signs List]

1: remote operation system, 2: remote operator, 3: remote operation management center, 4: candidate operator, 5: waiting location, 10: moving body, 20: remote operation device (information providing device), 25, 51, 61: display (notification device), 26, 62: speaker (notification device), 30: management device, 40: service provider system, 50: display device (information providing device), 60: mobile terminal (information providing device), MNG: management information, MOV: moving body information, OPE: remote operation information, PRG: progress information, PST: presentation information, REQ: request information

## Claims

1. An information providing device comprising
a notification device configured to notify one or more candidate operators of presentation information before a remote operator who accepts a request for remote operation from a moving body is determined, wherein the one or more candidate operators are candidates for the remote operator, and the presentation information indicates a content of the request.

2. The information providing device according to claim 1, wherein
a type of the moving body is plural, and
the presentation information includes information indicating the type of the moving body.

3. The information providing device according to claim 1 or 2, wherein
the remote operation is provided as a plurality of types of remote operation services, and
the presentation information includes information indicating the type of the remote operation service.

4. The information providing device according to claim 1, wherein
the presentation information includes information indicating a state of the moving body at a time of the request.

5. The information providing device according to claim 1, wherein
the presentation information includes information on urgency of the remote operation.

6. The information providing device according to claim 5, wherein
the notification device is configured to notify the presentation information with at least one of a display and a sound that vary depending on the urgency.

7. The information providing device according to claim 1, wherein
the presentation information includes information on a qualification required of the remote operator for the remote operation.

8. The information providing device according to claim 1, wherein
the presentation information includes information on a condition for completing the remote operation.

9. The information providing device according to claim 1, wherein
the presentation information includes information on difficulty level of the remote operation.

10. The information providing device according to claim 1, wherein
the notification device includes at least one of a display and a speaker of a remote operation device scheduled to be operated by the remote operator to perform the remote operation based on the request.

11. The information providing device according to claim 1, wherein
the presentation information includes different content depending on proficiency of the one or more candidate operators in the remote operation.

12. The information providing device according to claim 1, wherein
the information providing device is arranged in a waiting location for the one or more candidate operators.

13. The information providing device according to claim 1, wherein
The information providing device is a mobile terminal carried by the one or more candidate operators.

14. An information providing method for a computer to provide information, comprising:
obtaining presentation information indicating a content of a request for remote operation from a moving body; and
notifying one or more candidate operators of the obtained presentation information via a notification device before a remote operator who accepts the request is determined, wherein the one or more candidate operators are candidates for the remote operator.

15. An information providing program executed by a computer,
the information providing program causing the computer to execute:
obtaining presentation information indicating a content of a request for remote operation from a moving body; and
notifying one or more candidate operators of the obtained presentation information via a notification device before a remote operator who accepts the request is determined, wherein the one or more candidate operators are candidates for the remote operator.
